# EUROPÄISCHE PATENTSCHRIFT

(11) **EP 1 513 701 B1**
(45) Veröffentlichungstag und Bekanntmachung des Hinweises auf die Patenterteilung: **10.10.2018**
(21) Anmeldenummer: 03732503.2
(22) Anmeldetag: 30.05.2003
(51) Int. Cl.: B60K 1/04, B60L 11/18

(54) **VERFAHREN ZUM ERGÄNZEN UND ERFASSEN VERBRAUCHTER ENERGIE BEI EINEM FAHRZEUG**
METHOD FOR SUPPLEMENTING AND CALCULATING ENERGY CONSUMED BY A VEHICLE
PROCEDE POUR COMPLETER ET DETECTER L'ENERGIE CONSOMMEE DANS UN VEHICULE

(30) Priorität: 05.06.2002 DE 10224807
(43) Veröffentlichungstag der Anmeldung: 16.03.2005
(73) Patentinhaber: Wobben Properties GmbH, 26607 Aurich (DE)
(72) Erfinder: Wobben, Aloys, 26607 Aurich (DE)
(74) Vertreter: Eisenführ Speiser
(86) Internationale Anmeldenummer: PCT/EP2003/005672
(87) Internationale Veröffentlichungsnummer: WO 2003/104018

(56) Entgegenhaltungen:
- EP-A2- 0 575 864
- DE-A- 4 229 687
- FR-A- 2 685 547
- FR-A- 2 716 228
- GB-A- 2 353 151
- US-A- 5 272 431
- US-A- 5 998 963

## Beschreibung

Die vorliegende Erfindung betrifft ein Verfahren zum Ergänzen und Erfassen verbrauchter Energie bei einem Fahrzeug, welches eine Aufnahme für einen ersten Energiespeicher aufweist.

Die Erfindung betrifft außerdem ein Fahrzeug zum Betrieb mit einem Energiespeicher.

Es ist heute für jeden Fahrer eines Kraftfahrzeuges Routine, zum Ergänzen seines Kraftstoffvorrates zu einer Tankstelle zu fahren und dort seinen Tank aufzufüllen. Während des Tankvorgangs wird bekanntlich die in den Tank fließende Kraftstoffmenge erfasst und zur Abrechnung zu einer Kasse übermittelt. Ein solcher Vorgang läuft bei verschiedensten Kraftstoffen ab, die in Verbrennungsmaschinen verwendet werden, sei es Benzin, Dieselkraftstoff, Gas, usw.

Neben der überwiegenden Anzahl von Kraftfahrzeugen mit Verbrennungsmaschinen gibt es eine geringe aber zunehmende Anzahl von Fahrzeugen mit Elektroantrieben. Bei diesen Fahrzeugen wird die Antriebsenergie in Akkumulatoren oder Kondensatoren gespeichert. Da gerade Akkumulatoren nur mit einem vorgegebenen Maximalstrom geladen werden können, erfolgt die Aufladung in der Weise, dass das Fahrzeug nach der Benutzung mittels eines Kabels mit einer Stromquelle verbunden wird und dann mit dem vorgegebenen maximalen Ladestrom z. B. über Nacht die Akkumulatoren wieder aufgeladen werden, so dass das Fahrzeug am folgenden Morgen wieder mit voll aufgeladenen Speichern zur Verfügung steht.

Bekannt ist auch ein elektrisches Energiesystem aus EP 0 557 287 B1. Ferner wird auf den Stand der Technik gemäß EP 0575864 hingewiesen sowie auf GB-A-2353151, FR-A-2716228, US-A-5,272,431, FR-A1-2685547, DE-A1-4229687, US-A-5,998,963. Alle vorgenannten Druckschriften offenbaren in irgendeiner Weise den Austausch von Batterien bei Fahrzeugen dieser Art.

Aufgabe der vorliegenden Erfindung ist es, ein System zu schaffen, dass bei elektrisch betriebenen Fahrzeugen eine Bereitstellung elektrischer Energie innerhalb eines begrenzten Zeitabschnittes sowie deren Abrechnung erlaubt. Ferner soll sichergestellt werden, dass ein Energiediebstahl ausgeschlossen wird.

Die Aufgabe wird erfindungsgemäß mit einem Verfahren nach Anspruch 1 und einem Elektrofahrzeug nach Anspruch 5 gelöst. Vorteilhafte Weiterbildungen sind in den Unteransprüchen beschrieben.

Das Verfahren beruht auf dem Konzept, dass
a) der erste Energiespeicher aus dem Fahrzeug entnommen wird,
b) ein zweiter Energiespeicher mit einem vorgebbaren Füllstand in das Fahrzeug eingesetzt wird,
c) die Differenz der Energiemenge zwischen dem ersten und dem zweiten Speicher ermittelt wird, und
d) ein die Differenz anzeigender Wert zu einer Datenerfassungseinrichtung übertragen wird.

Bei dieser Datenerfassungseinrichtung kann dieser die Differenz anzeigende Wert natürlich einer beliebigen Verarbeitung unterworfen werden, so dass sich z. B. ein Preis für die Differenz der Energiemenge ermitteln lässt. Durch den Austausch des Energiespeichers bleibt die für den Auffüllvorgang (Ladevorgang) aufzuwendende Zeit begrenzt auf den Austauschvorgang, da der zweite (der einzusetzende) Energiespeicher bereits voll aufgeladen sein kann. Damit bleibt die Zeit auch für das "Tanken" von elektrischem Strom auf einen Zeitabschnitt begrenzt, der jedem Autofahrer auch heute von einem normalen Tankvorgang her vertraut ist. Dies ist ganz wesentlich für die Akzeptanz eines solchen Systems.

Weiterhin kann durch Einsetzen eines Speichers mit höherer Kapazität die Reichweite eines Fahrzeugs (gegebenenfalls nur vorübergehend) erhöht werden. Schließlich kann durch einen solchen Austausch der Energiespeicher, z. B., wenn nur eine kurze Stecke zu fahren ist, ein nachts an einem Hausanschluss mit billigem Nachtstrom aufgeladener Speicher entnommen und durch einen mit einer für den Tag ausreichenden Energiemenge geladenen Speicher ersetzt werden. Auch hier kann eine Differenz (zugunsten des Kunden) ermittelt und dem Kunden somit ein Betrag gutgeschrieben bzw. ausgezahlt werden.

Der volle Speicher mit billigem Nachtstrom kann dann z. B. verwendet werden, um während der Mittagsspitze das Netz zu stützen. Somit kann der nachts billig einkaufte Strom während dieser Spitze zu einem höheren Preis verkauft werden.

Um sicherzustellen, dass die in ein Fahrzeug eingesetzten Energiespeicher zuverlässig arbeiten und nicht zu einem (vorzeitigen) Ausfall des Fahrzeugs führen, wird jeder Energiespeicher vor dem Ladevorgang einer Funktionsprüfung und/oder einer oder mehreren weiteren Prüfungen unterworfen.

Um die Prüfergebnisse nachvollziehbar zu machen, werden vorgegebene Daten der Prüfung bzw. Prüfungen gespeichert. Diese Speicherung kann z. B. durch eine schriftliche Eintragung in einem Begleitheft oder auf einer Plakette an dem Speicher erfolgen. Zusätzlich oder alternativ kann der Speicher natürlich auch mit einem entsprechenden Chip ausgerüstet sein, um diese Daten zu speichern und bei Bedarf auszugeben.

In einer bevorzugten Weiterbildung des Verfahrens wird nach dem Austausch des Energiespeichers eine Energieentnahme aus dem zweiten Speicher verhindert und/oder eine Wegfahrsperre verhindert ein Wegfahren des Fahrzeugs und durch ein Signal wird die Energieentnahme und/oder die Wegfahrsperre von der Datenerfassungseinrichtung freigegeben. Auf diese Weise wird ein "Kraftstoffdiebstahl" wirksam verhindert, wenn eine solche Freigabe erst dann erfolgt, wenn z. B. der Preis für den neuen Speicher entrichtet ist.

Um dem Fahrer oder z. B. dem Halter einen Überblick über den Energieverbrauch des Fahrzeugs zu geben, können auch mit dem Verbrauch in Zusammenhang stehende Daten erfasst und zu der Datenerfassungseinrichtung übertragen werden. Dies können z. B. die gefahrene der Stecke, die Motorleistung des Fahrzeugs, Temperaturdaten und/oder andere Daten sein.

Auch kann ein Energiespeicher der eingangs genannten Art mit einer eindeutigen Kennzeichnung und/oder standardisierten Anschlüssen und/oder standardisierter Formgebung verwendet werden. Durch die eindeutige Kennzeichnung, z. B. als aufgeklebte Plakette, als elektronischer Chip, als Schlagzahl, oder Ähnliches ist eine eindeutige Identifizierung bzw. Verfolgung des Energiespeichers möglich. Durch die standardisierten Anschlüsse ist eine Verwendung eines Energiespeichers in jedem mit geeigneten Anschlüssen ausgerüsteten Fahrzeug möglich. Weiterhin kann ein solcher Energiespeicher mit standardisierten Anschlüssen an jedem geeignet ausgestatteten Messplatz durchgemessen und an jeder geeignet ausgestatteten Ladestation geladen werden. Um ebenfalls eine standardisierte und bevorzugt automatisierte Handhabung des Energiespeichers beim Entnehmen aus dem Fahrzeug und beim Einsetzen in das Fahrzeug zu ermöglichen, weist der Energiespeicher auch eine standardisierte Formgebung auf.

In einer bevorzugten Weiterbildung ist der Energiespeicher gekennzeichnet durch wenigstens eine Haltevorrichtung, an welcher ein austauschbarer Formkörper angebracht werden kann, der sich in die Außenhaut des Fahrzeugs einfügt. Dadurch kann auch für verschiedene Fahrzeugtypen der gleiche Speicher verwendet werden. Die zum Austauschen des Speichers in dem Fahrzeug vorgesehene Öffnung wird dann von dem Formkörper verschlossen, der Fahrzeug- bzw. Typ- spezifisch ausgebildet und mit einer geeigneten Befestigung an dem Energiespeicher befestigt ist. Natürlich kann auf diese Weise auch die Farbe angepasst werden.

Um einen Austausch der Energiespeicher bei unterschiedlichen Fahrzeug-Ausrichtungen zu ermöglichen, ist bei einer bevorzugten Ausführungsform des Fahrzeugs der Speicher von wenigstens einer Fahrzeugseite und/oder von der Fahrzeugunterseite zugänglich. Zugangsöffnungen symmetrisch an beiden Fahrzeug-Längsseiten erlauben somit einen seitlichen Austausch der Energiespeicher, ohne bei vorgegebenen örtlichen Gegebenheiten eine besonders detaillierte Fahrzeugsausrichtung zu erfordern.

Bei einer bevorzugten Weiterbildung des erfindungsgemäßen Fahrzeugs ist ein Behälter vorgesehen, der im Wesentlichen den Querschnitt des Energiespeichers aufweist, eine Haltevorrichtung für einen austauschbaren Formkörper aufweist und in den von dem Energiespeicher nicht benötigten Raum einsetzbar ist. Schließlich weist das Fahrzeug über seine gesamte Breite einen Kanal auf, der im Wesentlichen den Querschnitt des Energiespeichers hat; sonst wäre ein Austausch des Speicher an verschiedenen Fahrzeugseiten nicht möglich. Der von dem Energiespeicher nicht benötigte Platz in diesem Kanal kann als zusätzlicher Stauraum verwendet werden, z. B. für Werkzeug und/oder Warndreieck und/oder Verbandskasten. Je nach Position dieses Stauraumes im Fahrzeug sind diese Teile dort in einer besser geschützten Position als bei ihrer Unterbringung im Kofferraum.

Um z. B. für einen automatisierten Austausch des Energiespeichers sicher erkennen zu können, wo sich der Energiespeicher befindet, ist ein Fahrzeug gekennzeichnet durch eine Kennzeichnung, die den Fahrzeugtyp und/oder die Lage des Energiespeichers angibt. Diese Kennzeichnung kann ausgewertet und entsprechend auf die Lage des Energiespeichers, dessen Kapazität, und weitere Parameter geschlossen werden. Diese Kennzeichnung kann z. B. in Form einer am Fahrzeug angebrachten Markierung ausgebildet sein, als ein Steckverbinder oder eine Vorrichtung, die z. B. bei einer drahtlosen Anfrage ein entsprechendes Antwortsignal sendet.

Weiterhin wird die Aufgabe gelöst durch eine Einrichtung der eingangs genannten Art, gekennzeichnet durch wenigstens eine Vorrichtung zum Abtransport des ersten Energiespeichers und zur Zuführung des zweiten aufgefüllten Energiespeichers. Dadurch kann die Prüfung und/oder Aufladung des aus dem Fahrzeug entnommenen Energiespeichers an einer anderen Stelle, z. B. in einem zentralen Bereich erfolgen und an der entsprechenden Abstellposition des Fahrzeugs befinden sich nur der aus dem Fahrzeug entnommene erste Energiespeicher und der in das Fahrzeug einzusetzende zweite Energiespeicher.

In einer bevorzugten Weiterbildung der Erfindung ist die Einrichtung gekennzeichnet durch eine Vorrichtung zur Erfassung des Fahrzeug-Typs. Diese Erfassung kann z. B. durch bildgebende Verfahren (Kamera), eine manuelle Eingabe, z. B. über eine Tastatur, eine drahtlose Abfrage oder auf andere geeignete Weise erfolgen und dadurch kann der Einrichtung z. B. die Lage des Energiespeichers in dem Fahrzeug bekannt gemacht werden.

Um die Transportzeiten der einzelnen Energiespeicher im Bedarfsfall möglichst zu verkürzen, kann neben einer (zentralen) Einrichtung zum Prüfen und Auffüllen der aus den Fahrzeugen entnommenen Energiespeicher wenigstens ein Hauptlager und ein Zwischenlager in der Nähe wenigstens einer Fahrzeug-Abstellposition für die aufgefüllten Energiespeicher vorgesehen sein. Dadurch können aus dem Fahrzeug entnommene Energiespeicher der Einrichtung zum Prüfen und Auffüllen zugeführt werden. Dort werden sie dann geprüft und wieder aufgeladen und z. B. einem Hauptlager zugeführt. Aus diesem Hauptlager werden dann die nunmehr wieder abgabebereiten Energiespeicher kleineren Zwischenlagern, z. B. an den Fahrzeug-Abstellpositionen zugeführt, so dass dort stets eine Anzahl von geladenen und geprüften Energiespeichern verfügbar ist. Sobald nun ein Speicheraustausch bei einem Fahrzeug erfolgen soll, steht ein geprüfter und aufgeladener Speicher bereits in der Nähe des Fahrzeugs zur Verfügung und kann schnell eingebaut werden, so dass der Austauschvorgang entsprechend schnell bewerkstelligt wird.

Um einerseits Menschen von der schweren körperlichen Arbeit des Austausches der Energiespeicher zu entlasten und andererseits das Risiko von Fehlern zu verringern, weist eine Einrichtung wenigstens eine Vorrichtung zum selbsttätigen Austausch der Energiespeicher auf.

Um abhängig vom Fahrzeugtyp eine klar definierte Position zu haben, in welcher der Energiespeicher ausgetauscht wird, befindet sich in einer bevorzugten Weiterbildung der erfindungsgemäßen Einrichtung die Fahrzeug-Abstellposition auf einer Transportvorrichtung, die das Fahrzeug entlang verschiedener Arbeitspositionen transportiert.

Da bei diesem Austauschvorgang zum Ergänzen des Energievorrats durchaus eine Analogie zu einem Tankvorgang gegeben ist, kann eine solche Einrichtung natürlich auch mit einer bekannten Tankstelle integriert sein. Um bei einer solchen Einrichtung jedoch eine möglichst ungestörte Zu- und Abfahrt zu ermöglichen können bevorzugt wenigstens teilweise unterirdisch angelegte Transporteinrichtungen für die Energiespeicher zum Transport der Speicher zwischen einzelnen Lagerplätzen bzw. Arbeitsstationen vorgesehen sein.

Nachfolgend werden die Figuren näher erläutert. Dabei zeigen:
- Figur 1: ein Verfahren in einem Flussdiagramm;

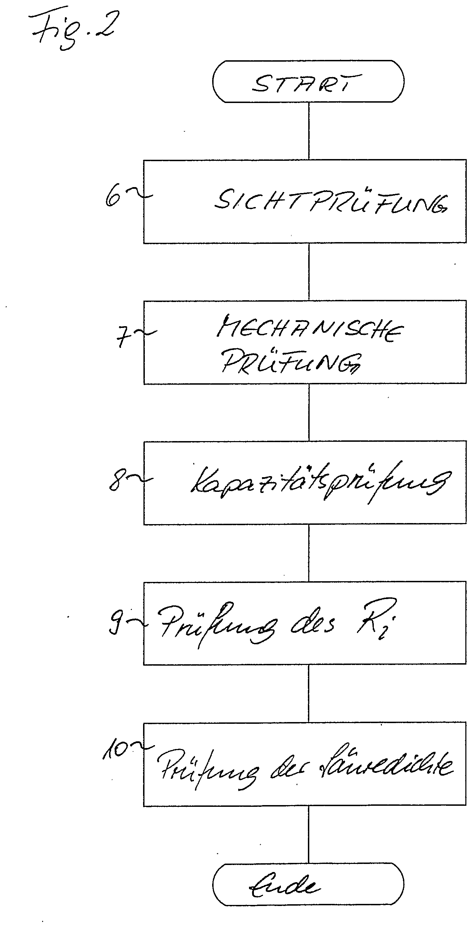

- Figur 2: ein Flussdiagramm, in welchem verschiedene Prüfungen dargestellt sind;
- Figur 3: einen Energiespeicher;
- Figur 4: eine Schaltung zur Freigabe des Speichers;
- Figur 5: eine vereinfachte Seitenansicht eines Fahrzeugs;
- Figur 6: eine Ansicht eines Energiespeichers;
- Figur 7: einen Staufacheinsatz; und
- Figur 8: eine Einrichtung zum Ergänzen des Energievorrats.

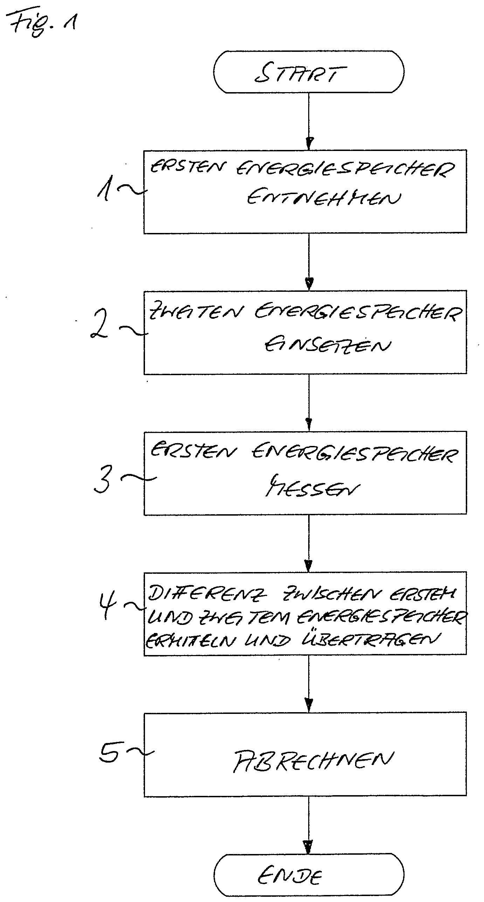

In Figur 1 ist das Verfahren zum Ergänzen des Energievorrates bei einem Elektrofahrzeug dargestellt. In dem Schritt 1 wird der erste Energiespeicher aus dem Fahrzeug entnommen, in Schritt 2 wird ein zweiter, geladener Energiespeicher eingesetzt, in Schritt 3 wird der erste Energiespeicher gemessen. Diese Messung betrifft zunächst nur die noch in dem Speicher enthaltene Energiemenge. Da die in dem zweiten, eingesetzten Energiespeicher enthaltene Energiemenge bekannt ist, kann leicht die Differenz gebildet (Schritt 4) und abgerechnet (Schritt 5) werden. Dabei ist es gleichgültig, ob die Speicher in ihrer Kapazität differieren. Somit kann z. B. in besonderen Situationen ein größerer und damit schwerer Speicher mit höherer Kapazität eingesetzt und dadurch die Reichweite des Fahrzeugs vergrößert werden. Nachdem Ende dieser besonderen Situation kann z.

B. dann wieder ein leichterer Speicher geringerer Kapazität mit entsprechend verringerter aber ausreichender Reichweite eingesetzt werden.

Sobald der Speicher aus dem Fahrzeug entnommen und die im Speicher verbliebene Energiemenge ermittelt ist, kann der Speicher einem weiteren Prüfvorgang unterworfen werden, um sicherzustellen, dass nur technisch einwandfreie Energiespeicher wieder aufgeladen und weiter verwendet werden. Solche Prüfungen können z. B. eine Sichtprüfung (Schritt 6) umfassen, bei der äußere Beschädigungen, Verformungen und Ähnliches festgestellt werden können. Weiterhin kann eine mechanische Prüfung (Schritt 7) ausgeführt werden, die Aufschluss über die Formstabilität, den festen Sitz von Anschlüssen oder Ähnliches gibt. Darüber hinaus ist z. B. eine Kapazitätsprüfung (Schritt 8), eine Prüfung des Innenwiderstandes (Schritt 9) und eine Prüfung der Säuredichte (Schritt 10) vorstellbar. Aus den Ergebnissen dieser und gegebenenfalls weiterer Prüfungen kann auf den Zustand und die vermutliche Restlebensdauer des Energiespeichers geschlossen werden. Es kann also sichergestellt werden, dass nur ein einwandfreier Speicher wieder aufgeladen und in ein Fahrzeug eingesetzt wird. Somit lässt sich ein Ausfall des Fahrzeugs infolge eines mangelhaften Speichers mit einiger Sicherheit vermeiden.

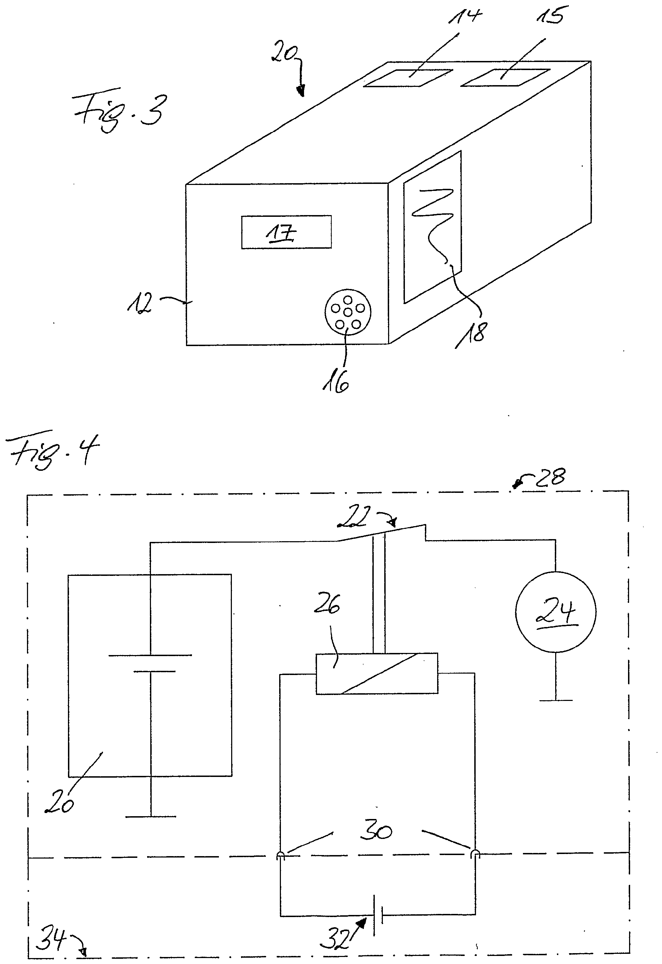

Figur 3 zeigt vereinfacht ein Beispiel eines Energiespeichers. Dieser Speicher weist ein Gehäuse 12 auf. In diesem Gehäuse oder an diesem Gehäuse befinden sich Elektroden 14, 15, z. B. in Form von Platten. Diese Platten haben einen ausreichenden Querschnitt, um die zum Betrieb des Fahrzeugs nötigen Ströme leiten zu können. Weiterhin ist ein Steckverbinder 16 vorgesehen, über den statische und/oder dynamische Messgrößen ermittelt werden können. Hier kommen z. B. Zellenspannungen, Innenwiderstände, etc. in Betracht. Weiterhin ist eine Kennzeichnung 17 vorgesehen. Diese Kennzeichnung 17 ermöglicht eine eindeutige Identifizierung des Energiespeichers, der in seiner Gesamtheit mit dem Bezugszeichen 20 bezeichnet ist. Sofern diese Kennzeichnung 17 z. B. in Form einer Plakette auf der Vorderseite des Energiespeichers 20 angebracht ist und ausreichend Platz bietet, können hier z. B. auch weitere Angaben wie die Messergebnisse oder ähnliches eingetragen werden. Weiterhin ist eine Tasche 18 dargestellt, in der z. B. Messprotokolle aufbewahrt werden können, so dass sie den Energiespeicher 20 stets begleiten. Alternativ oder zusätzlich können natürlich auch in einem (nicht dargestellten) elektronischen Speicher, der in den Energiespeicher 20 integriert sein kann, Kennzeichnungen und/oder Messergebnisse und/oder andere relevante Daten abgelegt sein.

Figur 4 zeigt ein vereinfachtes Beispiel einer Wegfahrsperre. Diese ist in zwei Teile aufgeteilt. Der eine Teil mit dem Bezugszeichen 28 ist dem Fahrzeug zugeordnet, während der andere Teil mit dem Bezugszeichen 34 der Auffüll-Station zugeordnet ist. Der im Fahrzeug angeordnete Teil 28 umfasst den Energiespeicher 20, einen (oder mehrere) Kontakte 22 und einen Motor 24. Dabei sind der Energiespeicher 20, der Kontakt 22 und der Motor 24 in Reihe geschaltet. Damit der Energiespeicher 20 Strom an den Motor 24 abgeben kann, muss daher der Kontakt 22 geschlossen sein. Der Kontakt 22 wird z. B. über eine Relais 26 betätigt. Dieses Relais 26 erhält über Steckverbinder 30 Strom von einer ortsfesten Stromquelle 32. Sobald also das Relais 26 mit einem Strom beaufschlagt wird, öffnet der Kontakt 22 und unterbricht den Stromkreis zwischen dem Energiespeicher 20 und dem Motor 24.

Auf diese Weise kann der Energiespeicher sicher lastfrei geschaltet werden. Nach dem Austausch des Speichers 20 und der Abrechnung der ergänzten Energiemenge kann die Verbindung zwischen der Stromquelle 32 und dem Relais 26 wieder unterbrochen werden. Dadurch fällt das Relais 26 ab, der Kontakt schließt sich und der Motor 24 kann mit Strom aus dem Energiespeicher 20 versorgt werden.

Natürlich sind auch andere Ausführungsformen denkbar. So kann z. B. das Relais 26 abhängig von dem Signal eines Funkempfängers angesteuert werden. Auf diese Weise kann die Freigabe der Energieversorgung für den Motor 24, also das Schließen des Kontaktes 22, mit dem Kassiervorgang automatisch verknüpft werden. Sobald der Kassiervorgang abgeschlossen ist, d. h. also, sobald die ergänzte Energiemenge bezahlt ist, kann der Stromfluss vom Energiespeicher 20 zum Motor 24 freigegeben werden. Dies bedeutet andererseits, solange der Kontakt 22 nicht geschlossen ist, d. h., solange die Stromversorgung des Motors 24 nicht freigegeben ist, kann das Fahrzeug nicht fortbewegt werden. Ein "Kraftstoffdiebstahl" ist ausgeschlossen.

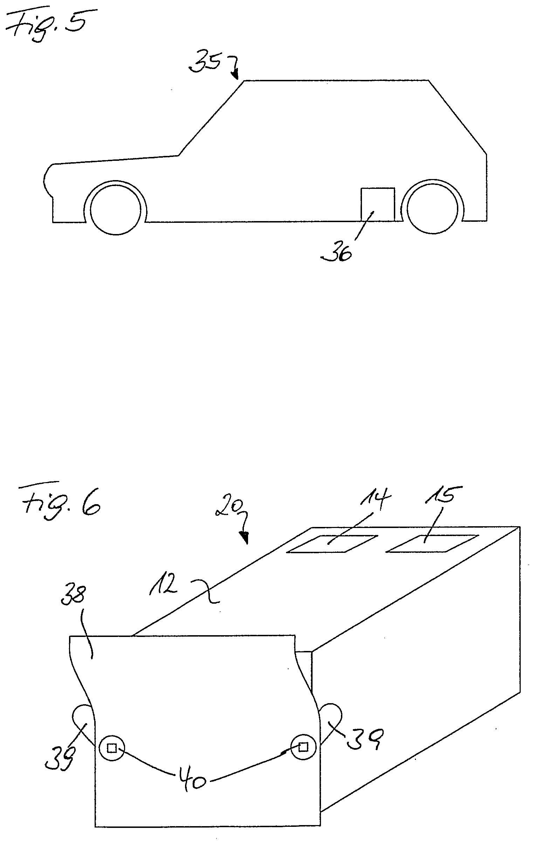

Figur 5 zeigt vereinfacht ein Beispiel eines Fahrzeugs 35. Bei diesem Fahrzeug 35 ist der Einbauort für den Energiespeicher mit dem Bezugszeichen 36 gekennzeichnet. Hier kommt also einerseits ein seitlicher Austausch in Betracht. Andererseits kann aber auch ein Austausch von der Fahrzeugunterseite her erfolgen, wenn eine entsprechende Zugangsöffnung vorgesehen ist. Natürlich kann auch auf der anderen Fahrzeugslängsseite eine entsprechende Zugangsmöglichkeit vorgesehen sein, um den Energiespeicher (in dieser Figur nicht dargestellt) auszutauschen.

In Figur 6 ist nochmals der Energiespeicher 20 vereinfacht dargestellt. Dabei ist an der Stirnseite des Energiespeicher-Gehäuses 12 eine Formplatte 38 dargestellt. Diese Formplatte 38 ist an dem Energiespeicher 20 fest aber lösbar angebracht. Wenn der Energiespeicher seitlich in das Fahrzeug eingesetzt wird, kann diese Zugangsöffnung (Bezugszeichen 36 in Figur 5) durch die Formplatte 38 verschlossen werden. Dieser Verschluss kann z. B. durch einfache, z. B. über Vierkantschlüssel 40 betätigte Riegel 39 auch mit dem Fahrzeug verbunden werden. Dabei ist die Formplatte 38 so ausgebildet, dass sie sich möglichst übergangslos in die äußere Fahrzeugform einfügt und die gleiche Farbe aufweist wie das Fahrzeug. Diese Formplatte 38 muss nicht zwingend mit dem Energiespeicher verbunden sein, denn ihre wesentliche Funktion ist ein unauffälliger Verschluss der Zugangsöffnung in der Karosserie des Fahrzeugs.

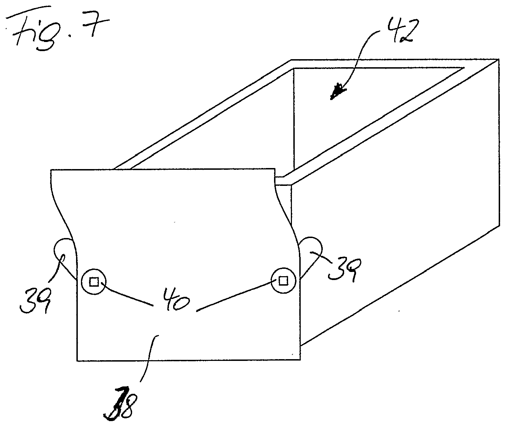

Wenn ein Austausch des Energiespeichers an jeder der Längsseiten des Fahrzeugs 35 möglich ist, verläuft innerhalb des Fahrzeugs eine Art Tunnel. Sofern dieser nicht vollständig von dem Energiespeicher ausgefüllt wird, kann der verbleibende Raum z. B. als Stauraum genutzt werden. Dazu kann ein Behälter 42, wie in Figur 7 dargestellt, vorgesehen sein, der in diesen Stauraum eingesetzt wird. Auch diese Zugangsöffnung kann mit einer bereits in Figur 6 dargestellten Formplatte 38 verschlossen werden. Natürlich sind auch andere Verriegelungen wie Hinterschneidungen, Schnappverbindungen, Schraubver-bindungen oder ähnliches zum Befestigen der Formplatte 38 und zum Verbinden mit der Fahrzeugkarosserie möglich.

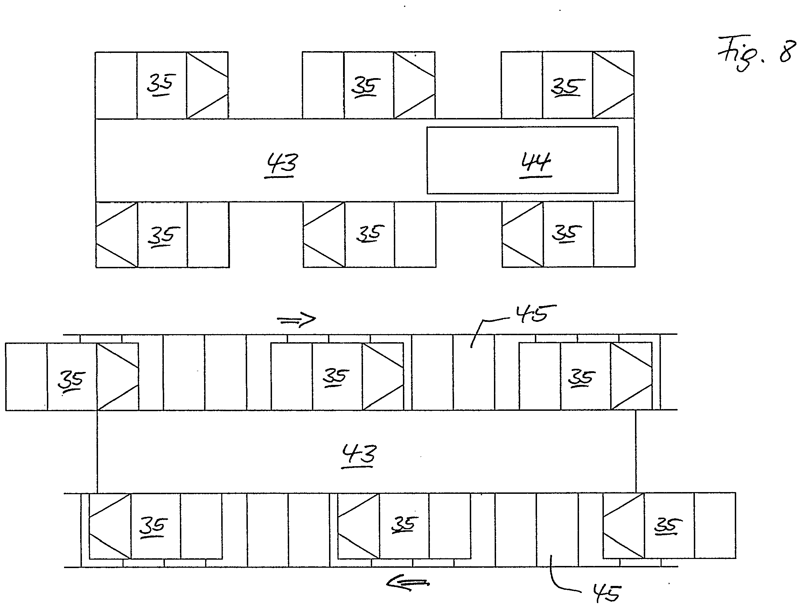

Figur 8 zeigt vereinfacht eine Einrichtung zum Ergänzen des Energievorrats. Eine solche Einrichtung kann eine bekannte Tankstelle sein, die mit entsprechenden Einrichtungen zum Austausch der Energiespeicher integriert ist. Allerdings kann ein Mindestabstand zwischen einer konventionellen Zapfsäule und einer Station zum Austauschen des Energiespeichers 20 vorgesehen sein. Durch diesen Mindestabstand wird sichergestellt dass, selbst wenn an einer konventionellen Zapfsäule verschütterter oder verdunsteter Kraftstoff mit der Luft ein zuständiges Gemisch bildet, nicht ein Funke (wie z. B. ein Abreißfunken (Lichtbogen)) beim Austausch des Energiespeichers 20, dieses Gemisch entzündet.

An dieser Einrichtung sind mehrere Abstellpositionen für Fahrzeuge 35 vorgesehen. An diesen Abstellpositionen können z. B. bekannte Zapfsäulen 44 vorgesehen sein, aus denen Kraftstoff in einen Tank eingefüllt werden kann.

An anderen Abstellpositionen können Energiespeicher 20 ausgetauscht werden. Diese Positionen können z. B. an beiden Seiten von Inseln 43 vorgesehen sein.

Im oberen Teil der Zeichnung befinden sich die Fahrzeuge 35 während des Austauschvorgangs stets an der gleichen Position an der Insel. Im unteren Teil der Zeichnung ist eine weitere Insel 43 dargestellt, an deren Längsseiten Transportbänder 45 verlaufen. Hier werden die Fahrzeuge 35 z. B. in Rad-Aufnahmen gefahren und dann von dem Transportband 45 mit einer vorgegebenen Geschwindigkeit kontinuierlich oder diskontinuierlich entlang der Insel 43 transportiert. Auf diese Weise können die Fahrzeuge 35 entlang vorbestimmter Arbeitsstationen bewegt werden. An der ersten Station kann z. B. der im Fahrzeug 35 befindliche Energiespeicher entnommen werden und an einer zweiten Station wird der neue Energiespeicher in das Fahrzeug 35 eingesetzt.

## Patentansprüche

1. Verfahren zum Ergänzen und Erfassen verbrauchter Energie bei einem Fahrzeug, welches eine Aufnahme für einen ersten Energiespeicher aufweist, wobei
a) der erste Energiespeicher (20) aus dem Fahrzeug (35) entnommen wird,
b) ein zweiter Energiespeicher (20) mit einem vorgebbaren Füllstand in das Fahrzeug (35) eingesetzt wird,
c) die Differenz der Energiemenge zwischen dem ersten und zweiten Speicher (20) ermittelt wird, und
d) ein die Differenz anzeigender Wert zu einer Datenerfassungseinrichtung übertragen wird, **dadurch gekennzeichnet, dass**
e) nach dem Austausch des Energiespeichers (20) eine Energieentnahme aus dem zweiten Energiespeicher (20) verhindert wird und eine Wegfahrsperre (22) ein Wegfahren des Fahrzeugs (35) verhindert, und
durch ein Signal die Energieentnahme und die Wegfahrsperre (22) freigegeben wird.

2. Verfahren nach Anspruch 1,
**dadurch gekennzeichnet, dass** der aus dem Fahrzeug (35) entnommene erste Energiespeicher (20) vor dem Auffüllvorgang einer Funktionsprüfung und/oder einer oder mehreren weiteren Prüfungen unterworfen wird.

3. Verfahren nach Anspruch 1 oder 2,
**dadurch gekennzeichnet, dass** vorgegebene Daten der Prüfung bzw. Prüfungen an dem bzw. in den Energiespeicher (20) aufbewahrt bzw. gespeichert werden.

4. Verfahren nach einem der vorstehenden Ansprüche,
**dadurch gekennzeichnet, dass** mit dem Verbrauch in Zusammenhang stehende Daten erfasst und zu der Datenerfassungseinrichtung übertragen werden.

5. Elektrofahrzeug zum Betrieb mit einem Energiespeicher (20), insbesondere aus einem oder mehreren Akkumulatoren oder Kondensatoren,
wobei vorgesehen ist, eine eindeutige Kennzeichnung (17) und/oder standardisierte Anschlüsse (14, 15) und/oder standardisierte Formgebung (12), wobei der erste Energiespeicher (20) wenigstens an einer Fahrzeugseite und/oder von der Fahrzeugunterseite zugänglich ist, und dass die Kennzeichnung den Fahrzeugtyp und/oder die Lage des ersten Energiespeichers (20) angibt, **dadurch gekennzeichnet, dass** der erste Energiespeicher (20) durch einen zweiten Energiespeicher austauschbar ist und eine Energieentnahme aus dem zweiten Energiespeicher (20) durch ein erstes Mittel verhindert wird und eine Wegfahrsperre (22) ein Wegfahren des Fahrzeugs (35) verhindert und durch ein Signal die Energieentnahme und die Wegfahrsperre (22) freigebbar ist.

6. Fahrzeug nach Anspruch 5,
**dadurch gekennzeichnet, dass** ein Behälter (42) vorgesehen ist, der im Wesentlichen den Querschnitt des Energiespeichers (20) aufweist, und/oder eine Haltevorrichtung für einen austauschbaren Formkörper (38) aufweist.

## Claims

1. Method for supplementing and calculating energy consumed by a vehicle comprising a receiving area for a first energy accumulator, wherein
a) the first energy accumulator (20) is removed from the vehicle (35),
b) a second energy accumulator (20) with a preset level is introduced into the vehicle (35),
c) the difference in the amount of energy between the first and the second accumulator (20) is determined, and
d) a value indicating the difference is transmitted to a data acquisition device, **characterized in that**
e) after exchange of energy accumulator (20), withdrawal of energy from the second energy accumulator (20) is prevented and a drive-away inhibition (22) prevents driving the vehicle (35) away, and
energy withdrawal and drive-away inhibition (22) is released via a signal.

2. Method according to claim 1, **characterized in that** the first energy accumulator (20) removed from the vehicle (35) is subjected to a function test and/or one or more additional tests before the recharging process.

3. Method according to claim 1 or 2, **characterized in that** preset data from the test or tests are preserved or stored at or in the energy accumulator (20).

4. Method according to one of the preceding claims, **characterized in that** data related to consumption is detected and transmitted to the data acquisition device.

5. Electric vehicle for operation with an energy accumulator (20), consisting in particular of one or more accumulators or capacitors, wherein it is provided an unambiguous label (17) and/or standardized terminals (14, 15) and/or a standardized shape (12), wherein accumulator (20) being accessible on at least one vehicle side and/or from the vehicle bottom, **characterized by** the first energy accumulator (20) is being exchangeable with a second energy accumulator and the withdrawal of energy from the second energy accumulator (20) is prevented by first means and a drive-away inhibition (22) prevents driving the vehicle (35) away, and energy withdrawal and drive-away inhibition (22) is releasable via a signal.

6. Vehicle according to claim 5, **characterized in that** a container (42) is provided that has essentially the cross section of energy accumulator (20) and/or comprising a retaining device for an exchangeable molded element (38).

## Revendications

1. Procédé servant à compléter et à détecter l'énergie consommée dans un véhicule, qui présente un relevé pour un premier accumulateur d'énergie,
dans lequel
a) le premier accumulateur d'énergie (20) est prélevé du véhicule (35),
b) un deuxième accumulateur d'énergie (20) avec un niveau de remplissage pouvant être spécifié est utilisé dans le véhicule (35),
c) la différence de la quantité d'énergie entre le premier et le deuxième accumulateur (20) est déterminée, et
d) une valeur indiquant la différence est transmise à un dispositif de détection de données, **caractérisé en ce que**
e) après le remplacement de l'accumulateur d'énergie (20), un prélèvement d'énergie du deuxième accumulateur d'énergie (20) est empêché et un système d'immobilisation (22) empêche un départ du véhicule (35) et le prélèvement d'énergie et le système d'immobilisation (22) sont débloqués par un signal.

2. Procédé selon la revendication 1,
**caractérisé en ce que** le premier accumulateur d'énergie (20) prélevé du véhicule (35) est soumis avant l'opération de remplissage à un contrôle de fonctionnement et/ou à un ou plusieurs autres contrôles.

3. Procédé selon la revendication 1 ou 2,
**caractérisé en ce que** les données spécifiées du contrôle ou des contrôles sont conservées ou mémorisées au niveau de, ou dans, l'accumulateur d'énergie (20).

4. Procédé selon l'une quelconque des revendications précédentes,
**caractérisé en ce que** des données en relation avec la consommation sont détectées et sont transmises au dispositif de détection de données.

5. Véhicule électrique destiné à fonctionner avec un accumulateur d'énergie (20), en particulier à partir d'un ou de plusieurs accumulateurs ou condensateurs, dans lequel sont prévus une étiquette (17) claire et/ou des connexions (14, 15) standardisées et/ou un façonnage (12) standardisé, dans lequel le premier accumulateur d'énergie (20) est accessible au moins au niveau d'un côté de véhicule et/ou depuis le côté inférieur de véhicule, et que l'étiquette indique le type de véhicule et/ou la position du premier accumulateur d'énergie (20), **caractérisé en ce que** le premier accumulateur d'énergie (20) peut être remplacé par un deuxième accumulateur d'énergie et un prélèvement d'énergie depuis le deuxième accumulateur d'énergie (20) est empêché par un premier moyen et un système d'immobilisation (22) empêche un départ du véhicule (35) et le prélèvement d'énergie et le système d'immobilisation (22) peuvent être débloqués par un signal.

6. Véhicule selon la revendication 5,
**caractérisé en ce qu'**est prévu un contenant (42), qui présente sensiblement la section transversale de l'accumulateur d'énergie (20) et/ou présente un dispositif de maintien pour un corps moulé (38) pouvant être remplacé.
